# EUROPÄISCHE PATENTSCHRIFT

(11) **EP 1 604 126 B1**
(45) Veröffentlichungstag und Bekanntmachung des Hinweises auf die Patenterteilung: **05.08.2009**
(21) Anmeldenummer: 04719996.3
(22) Anmeldetag: 12.03.2004
(51) Int. Cl.: F16D 65/092

(54) **SCHEIBENBREMSE**
DISK BRAKE
FREIN A DISQUE

(30) Priorität: 20.03.2003 DE 10312479
(43) Veröffentlichungstag der Anmeldung: 14.12.2005
(73) Patentinhaber: Lucas Automotive GmbH, 56070 Koblenz (DE)
(72) Erfinder: SCHOG, Michael, 56753 Mertloch (DE); WOLLENWEBER, Karl-Heinz, 56299 Ochtendung (DE); SCHROETER, Christian, 53489 Sinzig (DE); HEES, Dirk, 56727 Mayen (DE); ZENZEN, Guido, 56290 Macken (DE)
(74) Vertreter: von Hellfeld, Axel
(86) Internationale Anmeldenummer: PCT/EP2004/002605
(87) Internationale Veröffentlichungsnummer: WO 2004/083667

(56) Entgegenhaltungen:
- EP-A- 0 218 033
- DE-A- 2 211 013
- DE-A- 2 931 216
- DE-A- 4 324 988
- DE-A- 10 006 393
- US-A- 4 093 043
- US-A- 5 860 496
- US-A- 6 039 155
- US-A- 6 062 349

## Beschreibung

Die Erfindung betrifft eine Scheibenbremse mit einem an Fahrzeug befestigbaren Bremsträger, der Bolzen auf der Einlaufseite und auf der Auslaufseite der Bremse aufweist, die beim Bremsen auf die Bremsbeläge Zugkräfte und/oder Druckkräfte aufnehmen.

Bremsen dieser Art sind allgemein bekannt. Üblicherweise werden die Bremsbeläge, bestehend aus Tragplatte und Reibbelag, mittels am Bremsträger befestigter Bolzen axial in Bezug auf die Bremsscheibe geführt. "Axial" bei Scheibenbremsen bedeutet im Allgemeinen: in einer Richtung parallel zur Drehachse der Bremsscheibe. "Radial" bedeutet entsprechend eine Richtung senkrecht zu einer axialen Richtung im vorstehenden Sinne.

Den Stand der Technik derartiger Scheibenbremsen repräsentieren z.B. die folgenden Patentdokumente: DE 1 238 284, DE 1 505 491, DE 1 575 920, DE 196 52 936, DE 2 804 808, DE 39 33 395, DE 2 845 404, DE 41 15 064 und DE 4 416 815. Zum Stand der Technik gehören ebenfalls die Dokumente US 4 093 043, US 5 860 496 und EP 0218 033 A1. Die US 4093043 offenbart eine Scheibenbremse gemäß dem Oberbegriff des Anspruchs 1.

Eine andauernde technische Aufgabenstellung beim Entwurf von Scheibenbremsen ist die Reduzierung des Herstellungsaufwandes und des Gewichts der Bremse bei gleichzeitiger hoher Funktionszuverlässigkeit und geringem Wartungsaufwand. Die beiden letztgenannten Zielvorgaben beinhalten insbesondere auch die Vermeidung von durch Rost bedingten Störanfälligkeiten der Bremse. Ein besonderes Problem bei allen Bremskonstruktionen ist die Vermeidung von Quietschgeräuschen durch Schwingungen.

Diesen technischen Zielsetzungen widmet sich auch die vorliegende Erfindung.

Die erfindungsgemäße Scheibenbremse ist im Patentanspruch 1 näher beschrieben. Bevorzugte Ausgestaltungen sind in den abhängigen Ansprüchen beschrieben.

Die oben angesprochenen technischen Ziele werden nach der Erfindung dadurch erreicht, dass die Mittelachsen der Bolzen eine Ebene aufspannen, die einen kleineren radialen Abstand von der Scheibenachse hat als der Flächenschwerpunkt des Reibbelages des Bremsbelages.

Der erfindungsgemäße Bremsbelag ist in Patentanspruch 8 näher beschrieben.

Bevorzugte Ausgestaltungen der Erfindung sind in den abhängigen Ansprüchen beschrieben. Die Erfindung betrifft auch einen Bremsbelag zur Verwendung in einer Scheibenbremse.

Weitere bevorzugte Ausgestaltungen der Erfindung sind in den abhängigen Ansprüchen und in der nachfolgenden Beschreibung von Ausführungsbeispielen mitgeteilt. Es zeigt:
- Figur 1: eine Scheibenbremse in Vorderansicht, d.h. im montierten Zustand von der fahrzeugäußeren Seite her gesehen;
- Figur 2: die Scheibenbremse gemäß Figur 1 in Draufsicht, von oben auf den Sattel;
- Figur 3: die Scheibenbremse gemäß den Figuren 1 und 2 von der Seite, d.h. in Richtung der Ebene der Bremsscheibe;
- Figur 4: die Scheibenbremse gemäß den Figuren 1 bis 3 im Schnitt;
- Figur 5: den Bremsträger in Vorderansicht;
- Figur 6: den Bremsträger in Draufsicht;
- Figur 7: die Scheibenbremse gemäß den Figuren 1 bis 6 in Rückansicht, d.h. in montiertem Zustand vom Fahrzeuginneren her gesehen;
- Figur 8: einen Bremsbelag zur Verwendung bei einer Scheibenbremse gemäß den Figuren 1 bis 7;
- Figur 9: eine Ausgestaltung des Bremsträgers in Draufsicht;
- Figur 10: den Bremsträger gemäß Figur 9 in Rückansicht;
- Figur 11: ein abgewandeltes Ausführungsbeispiel eines Bremsträgers;
- Figur 12: ein abgewandeltes Ausführungsbeispiel eines Bremsbelages mit teilwei- se geschnittenem Bremsträger;
- Figur 13: den Bremsbelag gemäß Figur 12 in vergrößerter Darstellung;
- Figur 14: das Ausführungsbeispiel einer Bremse gemäß Figur 11 mit Sattel in Rückansicht (d.h. von der Innenseite des Fahrzeuges her gesehen);
- Figur 15: das Ausführungsbeispiel einer Bremse gemäß den Figuren 11 und 14 in Draufsicht;
- Figur 16: die Befestigung des Schwimmsattels am Bremsträger beim Ausführungsbeispiel der Bremse gemäß den Figuren 11, 14, 15;
- Figur 17: die Bolzenführung des Schwimmsattels bei einer Bremse nach dem Ausführungsbeispiel gemäß den Figuren 1 bis 10;
- Figur 18: einen Teil des Bremsträgers mit Bolzen und einer Federhülse; und
- Figur 19: einen Teil eines Bremsbelages und einen Belag-Haltebolzen mit einem Dämpfungsblech.

In den nachfolgenden Figuren sind unterschiedliche Ausführungsbeispiele dargestellt, wobei einander funktionsgleiche oder funktionsähnliche Bauteile mit denselben Bezugszeichen gekennzeichnet sind.

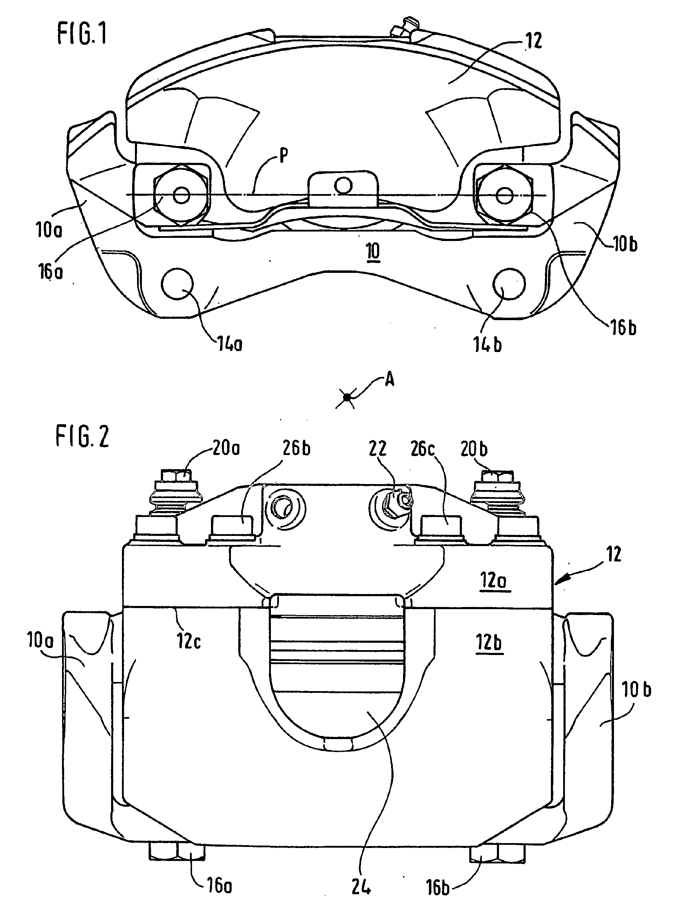

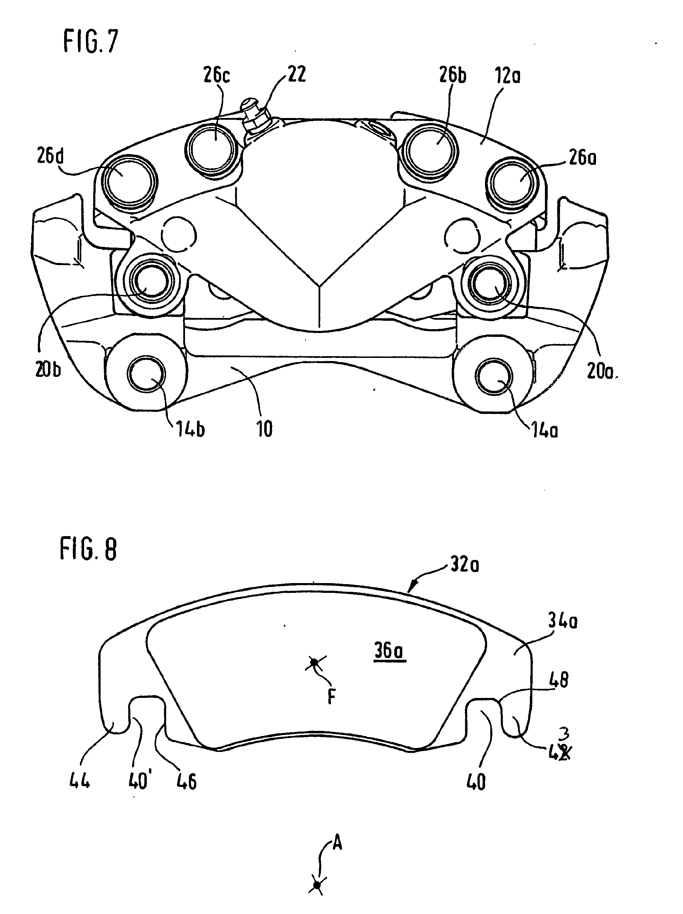

Wie insbesondere in den Figuren 1, 2, 5, 6 dargestellt ist, weist ein Bremsträger 10 zwei Arme 10a, 10b auf. Über dem Bremsträger ist ein Sattel 12 angeordnet, der bei den dargestellten Ausführungsbeispielen als Schwimmsattel und zweiteilig ausgebildet ist. Der Sattel weist einen fahrzeuginneren Abschnitt 12a und einen fahrzeugäußeren. Abschnitt 12b auf. Die Abschnitte 12a, 12b sind fest miteinander verbunden durch Schrauben 26a, 26b, 26c, 26d (vgl. Figuren 2 und 7). Der Bremsträger 10 ist in üblicher Weise fest am Fahrzeug befestigt, hierzu dienen Löcher 14a, 14b und Schrauben (nicht gezeigt).

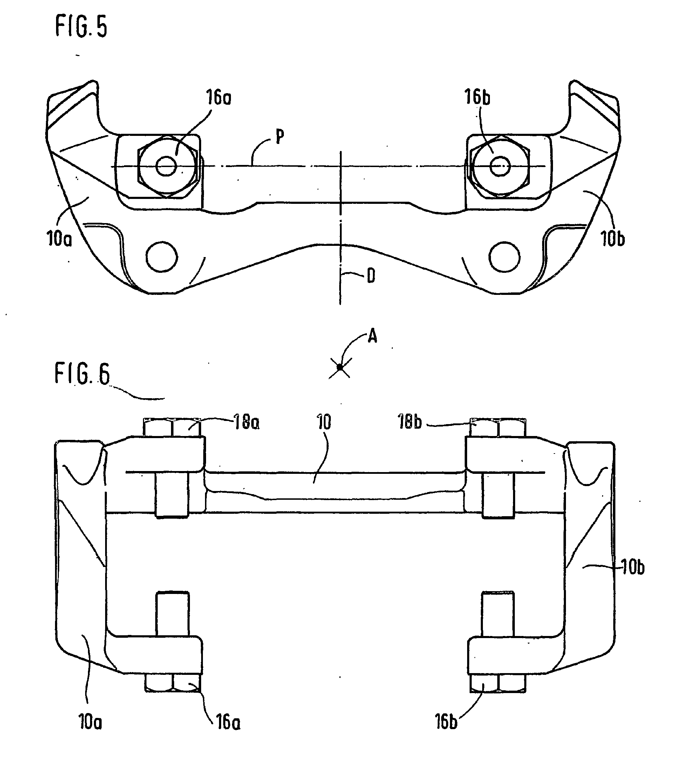

Wie insbesondere Figur 6 (und Figuren 1, 3, 4, 5) zeigen, sind Bolzenschrauben 16a, 16b, 18a, 18b mit dem Bremsträger 10 fest verbunden. Die genannten Bolzenschrauben sind über einen Teil ihrer Längserstreckung mit Außengewinde versehen, welches in ein passendes Innengewinde im Bremsträger 10 eingeschraubt ist. Die in Figur 6 freiliegenden Abschnitte der Bolzenschrauben (also diejenigen Abschnitte, die in Figur 6 nicht durch den Bremsträger abgedeckt sind) sind gewindefrei. Diese blanken Abschnitte der Bolzenschrauben 16a, 16b, 18a, 18b dienen, wie weiter unten näher beschrieben ist, zur Abstützung der Bremsbeläge. Die Bolzen der Bolzenschrauben, an denen die Bremsbeläge abgestützt sind, sind kreiszylinderförmig.

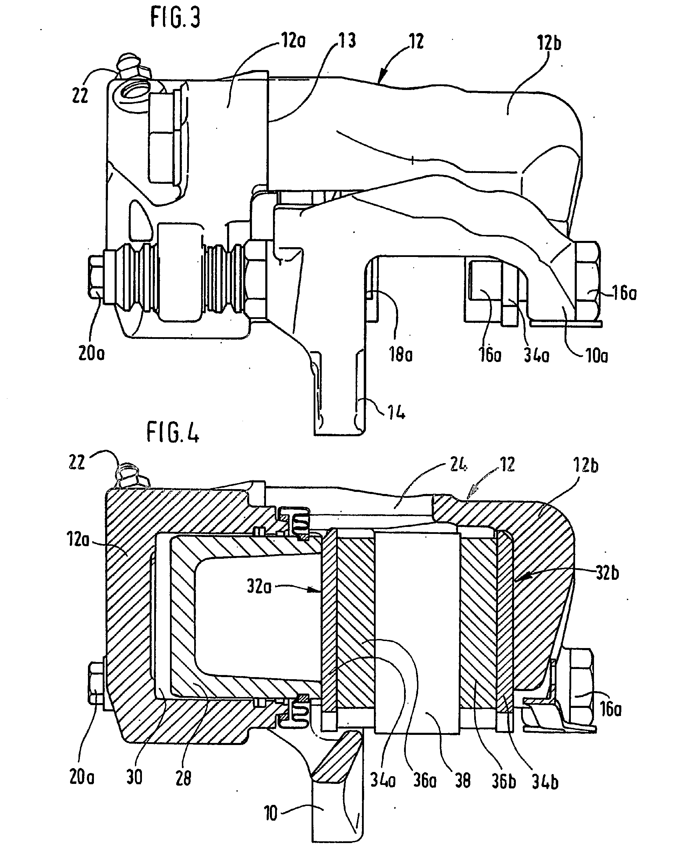

Wie insbesondere den Figuren 3, 4, 7 zu entnehmen ist, gleitet der Schwimmsattel 12 auf Bolzenschrauben 20a, 20b. Die Bolzenschrauben 20a, 20b sind in die fahrzeuginnenseitig gelegenen Bolzenschrauben 18a, 18b eingeschraubt, und zwar koaxial, wie insbesondere aus Figur 3 zu erkennen ist. Hierzu sind die Bolzenschrauben 18a, 18b, zentrisch mit einem Innengewinde versehen, in welches ein Außengewinde der Bolzenschrauben 20a, 20b jeweils einschraubbar ist. Somit sind die Bolzenschrauben 20a und 18a und auch die Bolzenschrauben 20b, 18b jeweils zueinander koaxial (vgl. Figur 3). Ebenso sind die Bolzenschrauben 16a, 18a koaxial und auch die Bolzenschrauben 16b, 18b (Figur 6).

Gemäß den Figuren 2 und 7 sind die beiden Sattelabschnitte 12a, 12b mittels Schrauben 26a, 26b, 26c, 26d fest miteinander verbunden. Die Anlagefläche der beiden Sattelabschnitte 12a, 12b ist in Figur 2 mit 12c bezeichnet.

Über einen Fluideinlass 22 wird in üblicher Weise Bremsfluid zum Bewegen des Kolbens 28 in eine Fluidkammer 30 eingeleitet (vgl. Figur 4). Wird also in der Kammer 30 der Fluiddruck erhöht, bewegt sich der Kolben 28 in Figur 4 nach rechts und der Sattel 12 entsprechend nach links.

Figur 8 zeigt einen (32a) der beiden baugleichen Bremsbeläge 32a, 32b (vgl. auch Figur 4). Der Bremsbelag 32a besteht aus einer Tragplatte 34a (aus Metall) und einem Reibbelag 36a. Der Reibbelag 36a verschleißt durch Reibung beim Bremsen. Figur 8 zeigt auch den Flächenschwerpunkt F des Reibbelages 32a. Der Bremsbelag weist auf der Einlaufseite und auf der Auslaufseite der Bremse jeweils eine U-förmige Ausnehmung 40, 40' auf. Figur 8 zeigt auch schematisch die Drehachse A der Bremsscheibe 38 (letztere in Figur 8 nicht gezeigt, vgl. Figur 4).

Die Bremsbeläge 32a, 32b werden mit ihren U-förmigen Ausnehmungen 40, 40' von oben auf die gewindefreien Abschnitte der Bolzenschrauben 16a, 16b bzw. 18a, 18b aufgesetzt. Dabei kommt es zu einer Linienberührung zwischen einer Wandung in den Ausnehmungen 40, 40' und der Oberfläche der jeweiligen Bolzenschraube 16a, 16b, 18a, 18b.

Die Bremsenbauteile, insbesondere die Positionen der Schraubenbolzen 16a, 16b, 18a, 18b und die Abstände zwischen den Ausnehmungen 40, 40' in den Bremsbelägen 32a, 32b und auch die Ausnehmungen 40, 40' selbst sind so bemessen, dass die Längsachsen der Bolzenschrauben 16a, 16b, 18a, 18b eine Ebene P aufspannen, welche also durch diese Achsen geht, deren Abstand D von der Drehachse A der Bremsscheibe (vgl. Figur 5 und 8) kleiner ist als der Abstand des Flächenschwerpunktes F des Reibbelages des Bremsbelages von dieser Drehachse A.

Gemäß einer Variante der Erfindung, werden die unterschiedlichen Abmessungen nicht auf die von den Bolzenachsen aufgespannte Ebene bezogen, sondern auf die Bolzenachsen selbst. Danach haben die Bolzenachsen einen geringeren radialen Abstand von der Scheibenachse A als der Flächenschwerpunld F des zugeordneten Reibbelages.

Weiterhin sind die genannten Abmessungen der Bremsenbauteile so gewählt, dass bei Einleitung einer Bremskraft, die das Fahrzeug bis etwa 0,1 g abzubremsen vermag, nur Zugkräfte auf die Bremsbeläge wirken. Wenn in Figur 8 sich die Bremsscheibe gegen den Uhrzeigersinn um die Achse A dreht, dann ist die Einlaufseite der Bremse rechts, also entsprechend der Ausnehmung 40, während die Auslaufseite der Bremse links liegt, entsprechend der Ausnehmung 40'. Bei Bremskräften, die unter gutem Reibeingriff zwischen Radreifen und Fahrbahn die genannte maximale Fahrzeug-Verzögerung von etwa 0,1 g nicht überschreiten, treten deshalb nur Zugkräfte am Bremsbelag 32a auf, d.h. auf der Einlaufseite, Figur 8, rechts werden die Bremskräfte von der einlaufseitigen Nase 43 des Bremsbelages aufgenommen. Die Reibkräfte wirken in Figur 8 nach links. Erst wenn eine Bremskraft oberhalb einer Verzögerung von 0,1 g eingeleitet wird, schlägt die Auflauffläche 46 des Bremsbelages gegen den zugeordneten Bolzen in der Ausnehmung 40' und die Bremskräfte werden mit Zugkräften an der Nase 43 und Druckkräften an der Fläche 46 aufgefangen.

Auch können die Abmessungen der Bremse so gewählt sein, dass die Bremsbeläge 32a, 32b bei Übertragung einer Bremskraft, die aus einem hydraulischen Bremsdruck von bis zu etwa 10 bar resultiert und entsprechend einer Fahrzeugverzögerung von bis zu etwa 1 m/s², stets nur die beschriebenen Zugkräfte am Bremsbelag wirken, während bei hydraulischen Bremsdrücken von mehr als 30 bar, entsprechend einer Fahrzeugverzögerung von mehr als 3 m/s², stets sowohl Zugkräfte als auch erhebliche Druckkräfte (wie oben beschrieben) von den Bremsbelägen auf die Bolzen wirken. Im Übergangsbereich zwischen 10 und 30 bar findet eine langsam steigende Kraftverteilung auf beide Bolzen statt.

Die vorstehend genannten Kraftübertragungen durch Zug bzw. Druck werden bevorzugt für den fahrzeugäußeren Bremsbelag gewählt. Für die auf der inneren Fahrzeugseite angeordneten Bremsbeläge werden die Abmessungen bevorzugt so gewählt, dass diese überwiegend gezogen werden.

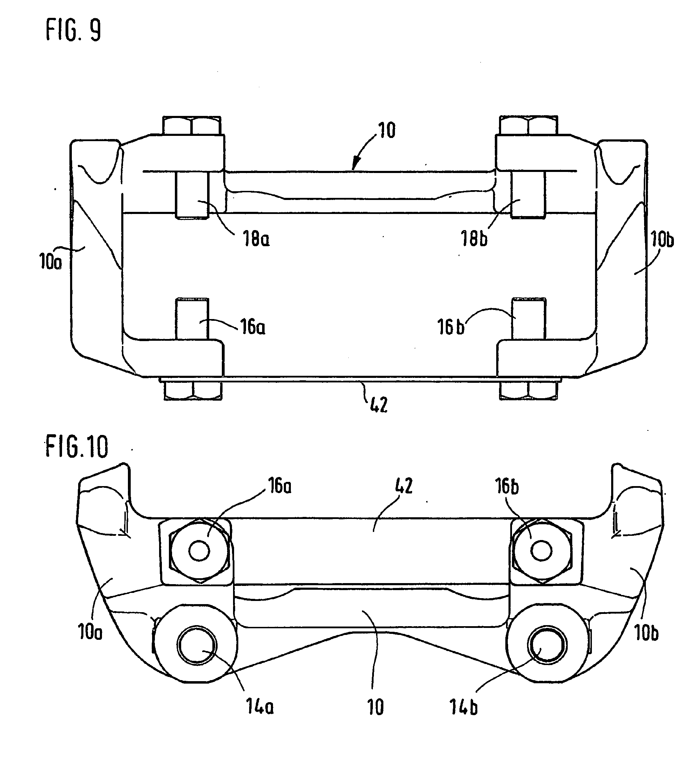

Die Figuren 9 und 10 zeigen eine besondere Ausgestaltung der Bremse, bei der der Bremsträger 10 auf der fahrzeugäußeren Seite mit einer Brücke 42 versehen ist, die die freien Arme 10a, 10b des Bremsträgers 10 miteinander verbindet. Die Brücke 42 kann z.B. aus Blech bestehen und wird mittels der Schraubenbolzen 16a, 16b verschraubt. Die Brücke 42 verstärkt den Bremsträger und kann Kräfte übertragen. Sie kann auch dazu dienen, z.B. eine Bezeichnung oder auch ein Markenzeichen anzubringen.

Die Brücke 42 kann auch als mehrschichtiges Blech ausgestaltet, insbesondere mit Dämpfungsmaterial versehen sein, bevorzugt in Sandwich-Bauweise mit der Dämpfungsschicht zwischen Metallschichten. Dabei ist bevorzugt im Bereich der Anschraubstellen (Schraubenbolzen 16a, 16b) kein Dämpfungsmaterial vorgesehen.

Die U-förmigen Ausnehmungen 40, 40' weisen entsprechend Figur 8 an ihren Böden abgerundete Übergänge zwischen den Seitenflächen auf, wobei die Übergangsradien (vgl. Bezugszeichen 48) kleiner sind als die Radien der abstützenden Bolzen 16a, 16b, 18a, 18b. Damit ist es möglich, die Berührungslinien zwischen dem Bremsbelag und dem Bolzen genauer zu definieren.

Die geringen, vorzugsweise linienförmigen Berührungsflächen der Bolzen in den U-förmigen Ausnehmungen 40, 40' ermöglichen, dass eventuelle Korrosionsprodukte aufgrund der hohen Flächenpressung entfernt werden. Schwingungen werden weitestgehend vermieden.

In den U-förmigen Ausnehmungen 40, 40' kann z.B. ein Dämpfungsblech; welches in der Form dem "U-" angepasst ist, angeordnet werden, also zwischen dem Bolzen und der Wandung der Ausnehmung. Auch können die Bolzen 16a, 16b, 18a, 18b mit einer Hülse versehen werden, insbesondere einer federnden (elastischen) Hülse, was ebenfalls eine erhöhte Dämpfung von Schwingungen bewirken kann.

Die vorstehend beschriebene Bremse hat insbesondere auch den Vorteil, dass sie besonders einfach herstellbar und montierbar ist. Bei der Herstellung reicht für die spangebende Bearbeitung des Bremsträgers nur Bohren, Anspiegeln und Gewindeschneiden.

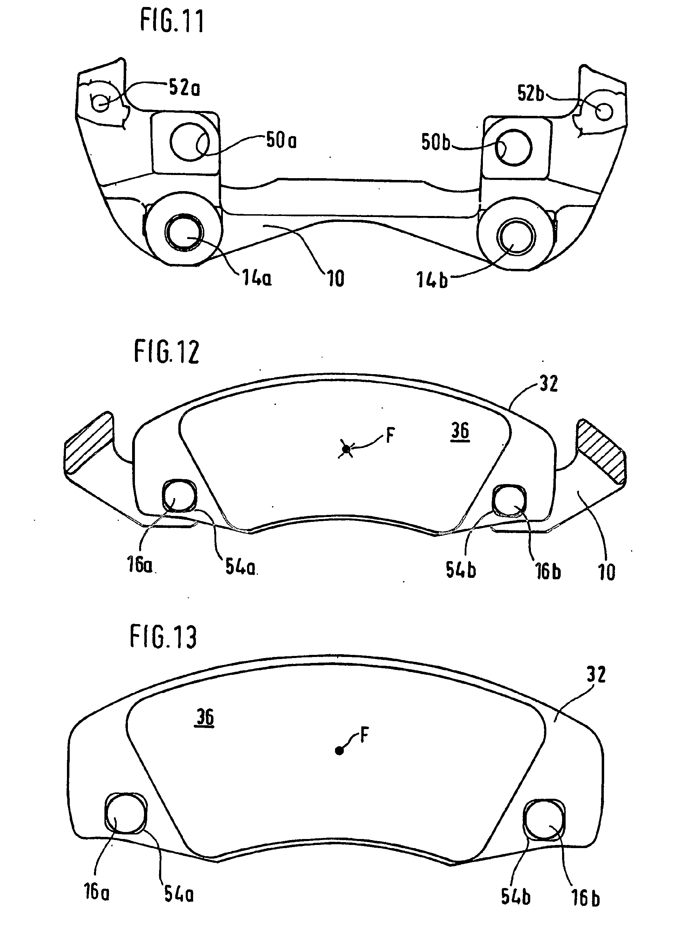

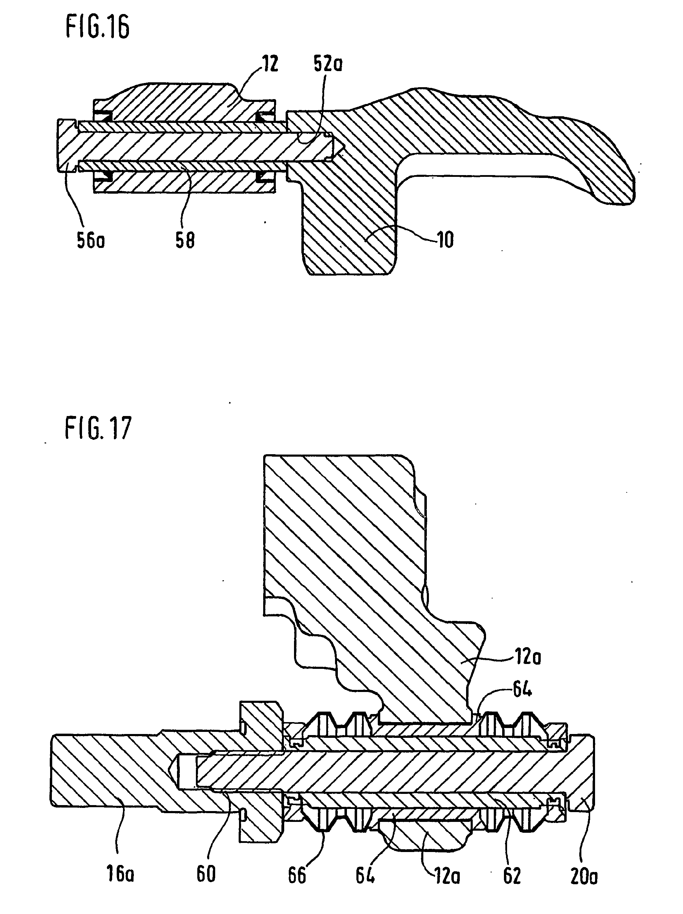

Figur 11 zeigt einen gegenüber dem Ausführungsbeispiel nach Figur 6 abgewandelten Bremsträger 10. In Übereinstimmung mit dem Ausführungsbeispiel gemäß Figur 6 sind auch beim Bremsträger 10 gemäß Figur 11 Gewindebohrungen 50a, 50b ausgeformt zur Aufnahme der Bolzenschrauben 16a, 16b, 18a, 18b (in Figur 11 nicht gezeigt). In Abwandlung des Ausführungsbeispieles gemäß Figur 6 sind aber beim Ausführungsbeispiel des Bremsträgers gemäß Figur 11 die Bolzen zur Führung des Bremssattels nicht in die einen Bremsbelag abstützenden Bolzenschrauben koaxial eingeschraubt, vielmehr sind gesonderte Gewindebohrungen 52a, 52b am Bremsträger 10 vorgesehen zur Aufnahme von Bolzenschrauben (vgl. Figur 16, Bezugszeichen 56a), auf denen der Sattel axial gleiten kann.

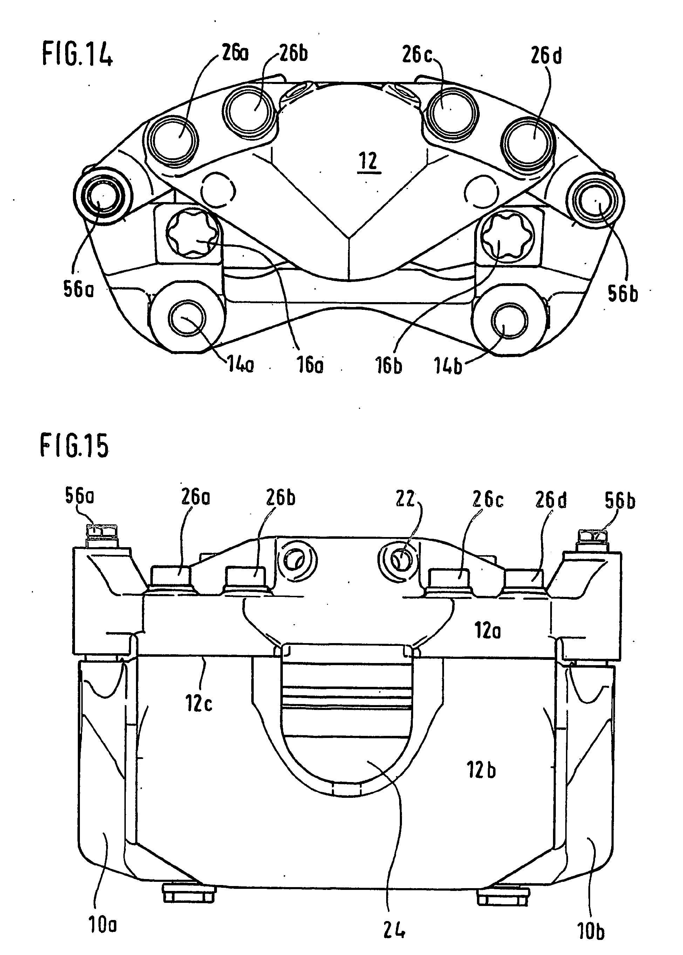

Die Bremse mit einem Bremsträger gemäß Figur 11 entspricht ansonsten, also bis auf die Führung des Bremssattels mittels der Gewindebohrungen 52a, 52b und entsprechender Bolzenschrauben 56a (vgl. Figur 16) dem Ausführungsbeispiel gemäß den Figuren 1 bis 10. Dies ist in den Figuren 14, 15 und 16 dargestellt, wo diejenigen Bauteile und Elemente, die die gleiche oder zumindest eine ähnliche Funktion haben, wie entsprechende Bauteile beim Ausführungsbeispiel gemäß den Figuren 1 bis 10, die gleichen Bezugszeichen wie in den Figuren 1 bis 10 tragen. In Abwandlung des obenbeschriebenen Ausführungsbeispieles gleitet also der Schwimmsattel 12 auf Bolzenschrauben 56a, 56b, die in die Gewindebohrungen 52a, 52b (Figur 11) eingeschraubt sind.

Figur 12 zeigt einen gegenüber dem Ausführungsbeispiel nach Figur 8 abgewandelten Bremsbelag 32 mit einem Reibbelag 36. Dieser Bremsbelag 32 ist in Figur 13 ohne den Bremsträger 10 etwas vergrößert dargestellt.

Bei den Ausführungsbeispielen gemäß den Figuren 1 bis 17 sind die Bolzenschrauben 16a, 16b, 18a, 18b, auf denen die Bremsbeläge abgestützt sind, im Abstützbereich jeweils zylinderförmig.

Die Figur 16 zeigt das oben bereits erwähnte Detail der Abstützung des Schwimmsattels 12 am Bremsträger 10 mittels einer Bolzenschraube 56a (die andere Seite der Bremse ist entsprechend ausgestaltet mit einer Bolzenschraube 56b, vgl. Figur 14), die in eine Gewindebohrung 52a im Bremsträger 10 eingeschraubt ist. Eine an sich bekannte Hülse 58 liegt zwischen der Bolzenschraube 56a und dem Sattel 12. Die Gleitführung ist in üblicher Weise abgedichtet.

Figur 17 zeigt ein Detail der Bremse gemäß den Figuren 1 bis 10, nämlich die koaxiale Anordnung der Bolzenschraube 20a, auf der der Schwimmsattel 12 gleitet, und der Bolzenschraube 16a, die den Bremsbelag abstützt. Wie oben bereits ausgeführt ist, ist in der Bolzenschraube 16a zentrisch ein Innengewinde 60 ausgeformt, in welches die Bolzenschraube 20a mit einem entsprechenden Außengewinde eingeschraubt ist. Eine Hülse 62 umschließt die Bolzenschraube 20a. Auf der Hülse 62 gleitet eine weitere Hülse 64, die mit dem Sattel 12 fest verbunden ist. Die Gleitfläche auf der Auβenseite der Hülse 62 ist mittels einer Dichtung 66 abgedichtet.

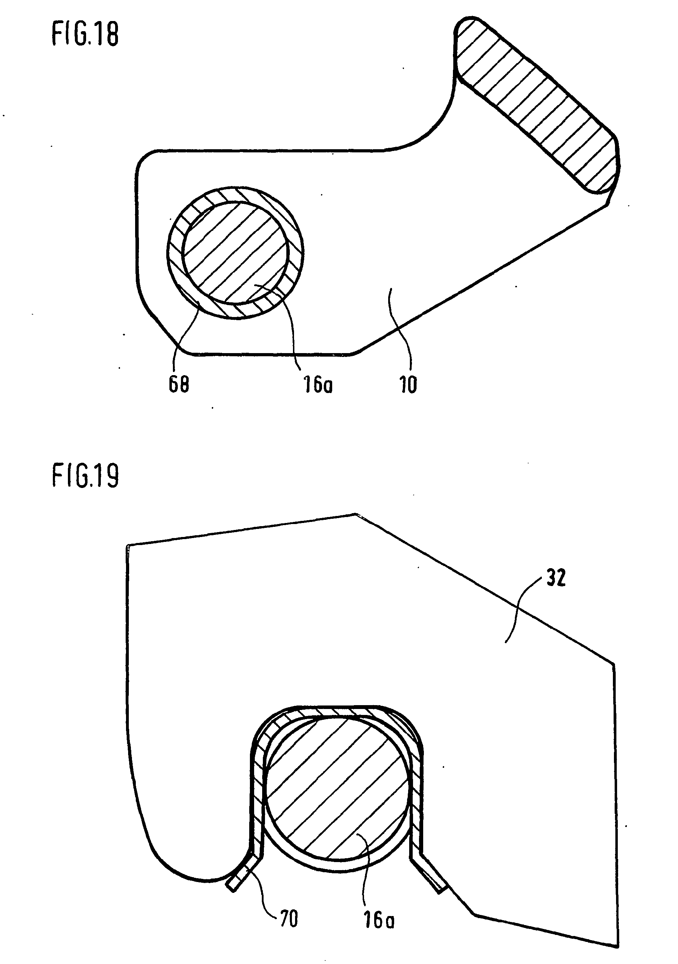

Die Figur 18 zeigt ein Detail einer bevorzugten Ausgestaltung eines Bremsträgers 10 mit einem Bolzen 16a, der hier mit einer Hülse 68 versehen ist, auf welcher der Bremsbelag abgestützt ist, entweder mittels der U-förmigen Ausnehmungen gemäß Figur 8 oder mit einem Loch 54a bzw. 54b nach den Figuren 12, 13. Die Hülse 68 kann korrosionshemmende Eigenschaften haben und/oder dämpfende Eigenschaften zwischen dem Bremsbelag und dem Bolzen aufweisen.

Figur 19 zeigt ein Detail einer bevorzugten Ausgestaltung mit einem Bremsbelag 32, der z.B. einen der Bremsbeläge 32a, 32b gemäß der obigen Ausführungsbeispiele darstellen soll, und mit einem Bolzen 16a,entsprechend könnte die Anordnung mit dem Bolzen 16b ausgestaltet werden, wobei ein Federblech 70 zwischen dem Bolzen und dem Bremsbelag zur Dämpfung angeordnet ist.

In Abwandlung der vorstehend als Ausführungsbeispiele beschriebenen Schwimmsattelbremsen kann die Erfindung auch mit einer Festsattelbremse verwirklicht werden. Insoweit entsprechen der Bremsträger und die Bolzen sowie die zugeordneten Merkmale der Bremsbeläge denen der Schwimmsattelbremse. Beim Festsattel erfolgt nur eine andere Krafteinleitung in die Bremsbeläge. Bei der Festsattelbremse können die Ausnehmungen entsprechend den Bezugszeichen 40, 40' in Figur 8 bevorzugt als Langlöcher ausgebildet werden. Bei diesen Ausführungsformen der Erfindung ist ein besonderer Vorteil darin zu sehen, dass aufgrund der gezogenen Bremsbeläge bei einer 4-Kolben-Bremse alle Kolbendurchmesser die gleiche Größe aufweisen können.

Es ist nicht erforderlich, auf der Auslaufseite größere Kolbendurchmesser vorzusehen.

## Patentansprüche

1. Scheibenbremse mit einem am Fahrzeug befestigbaren Bremsträger, der Bolzen auf der Einlaufseite und auf der Auslaufseite der Bremse aufweist, die beim Bremsen auf zumindest einen der Bremsbeläge (32; 32a, 32b) Zugkräfte und Druckkräfte ausüben, wobei der genannte Bremsbelag Aufnahmen (40, 40'; 54a, 54b) für die Bolzen aufweist, sodass die Zugkräfte und Druckkräfte an inneren Flächen der Aufnahmen aufgefangen sind, **dadurch gekennzeichnet, dass** die relativen Abmessungen und Anordnungen der Bolzen (16a, 16b) und des Bremsbelages so sind, dass bei Einleitung einer Bremskraft, die das Fahrzeug bis zu einem Maximalwert im Bereich von 0,1 g abzubremsen vermag, nur Zugkräfte auf die Einlaufseite des Bremsbelags wirken, und bei Einleitung einer Bremskraft, mit der eine Verzögerung oberhalb von 0,1 g eingeleitet wird, sowohl Zugkräfte auf die Einlaufseite als auch Druckkräfte auf die Auslaufseite des Bremsbelags wirken, und wobei die Mittelachsen der Bolzen (16a, 16b) eine Ebene (P) aufspannen, die einen kleineren radialen Abstand (D) von der Scheibenachse (A) hat als der Flächenschwerpunkt (F) des Reibbelages (36b) des Bremsbelages (32b).

2. Scheibenbremse nach Anspruch 1, **dadurch gekennzeichnet, dass** die Ebene (P), welche durch die Mittelachsen der Bolzen (16a, 16b, 18a, 18b) aufgespannt ist, einen um mindestens 5 %, bevorzugt mindestens 10 % und weiter bevorzugt mindestens 15 % kleineren radialen Abstand (D) von der Scheibenachse (A) hat als der Flächenschwerpunkt (F) des Reibbelages (36a, 36b) des Bremsbelages.

3. Scheibenbremse nach Anspruch 1, **dadurch gekennzeichnet, dass** der genannte Bremsbelag der äußere Bremsbelag (32b) ist.

4. Scheibenbremse nach einem der vorhergehenden Ansprüche, **dadurch gekennzeichnet, dass** die Bremsbeläge (32a, 32b) U-förmige Ausnehmungen (40, 40') aufweisen, in welche die Bolzen (16a, 16b, 18a, 18b) eingreifen.

5. Scheibenbremse nach Anspruch 4, **dadurch gekennzeichnet, dass** die Bremsbeläge (32a, 32b) in den U-förmigen Ausnehmungen (40, 40') Linienberührung mit dem jeweils zugeordnetem Bolzen (16a, 16b, 18a, 18b) haben.

6. Scheibenbremse nach einem der vorhergehenden Ansprüche, **dadurch gekennzeichnet, dass** die Bolzen aus einem anderen Material als der Bremsträger (10) bestehen, insbesondere aus wenig rostendem Stahl und/oder dass die Bolzen mit einer Beschichtung aus nichtrostendem Material versehen sind und/oder dass die Bolzen durch Nitrieren gegen Korrosion geschützt sind.

7. Scheibenbremse nach einem der vorhergehenden Ansprüche, **dadurch gekennzeichnet, dass** es eine Schwimmsattelbremse, Schwimmrahmenbremse, oder Festsattelbremse ist.

8. Bremsbelag (32a, 32b) für eine Scheibenbremse, die den Bremsbelag auf zwei Bolzen (16a, 16b, 18a, 18b) abstützt, wobei der Bremsbelag Aufnahmen (40, 40'; 54a, 54b) für diese Bolzen aufweist, auf deren inneren Flächen Zugkräfte und Druckkräfte beim Bremsen ausgeübt sind, **dadurch gekennzeichnet dass** die Aufnahmen so bemessen sind, dass bei Einleitung einer Bremskraft, die das Fahrzeug bis zu einem Maximalwert im Bereich von 0,1 g abzubremsen vermag, nur Zugkräfte auf die Einlaufseite des Bremsbelags wirken, und bei Einleitung einer Bremskraft, mit der eine Verzögerung oberhalb von 0,1 g eingeleitet wird sowohl Zugkräfte auf die Einlaufseite als auch Druckkräfte auf die Auslaufseite des Bremsbelags wirken, und wobei die Aufnahmen (40,40') so vorgesehen sind, dass die Mittelachsen der Bolzen eine Ebene (P) aufspannen, die einen kleineren radialen Abstand (D) von der Scheibenachse (A) hat als der Flächenschwerpunkt (F) des Reibbelages (36b) des Bremsbelages (32b).

9. Bremsbelag nach Anspruch 8, **dadurch gekennzeichnet, dass** er U-förmige Ausnehmungen (40, 40') aufweist, die so bemessen und angeordnet sind, dass sie Führungsbolzen (16a, 16b, 18a, 18b) des Bremsträgers (10) aufnehmen.

10. Bremsbelag nach Anspruch 9, **dadurch gekennzeichnet, dass** die Bremsbeläge (32a, 32b) in den U-förmigen Ausnehmungen (40, 40') Linienberührung mit dem jeweils zugeordnetem Bolzen (16a, 16b, 18a, 18b) haben.

## Claims

1. Disc brake having a brake carrier which is fastenable to the vehicle, wherein the brake carrier comprises bolts at the leading side and at the trailing side of the brake, which during braking exert tensile forces and compressive forces upon at least one brake lining, wherein the brake lining has receivers for the bolts so that the tensile forces and compressive forces are exerted at inner surfaces of the receivers, **characterized in that** the relative dimenions and arrangements of the bolts (16a, 16b) and the brake linings are such that upon introduction of a braking force which is capable to brake the vehicle up to a maximum value in the range of 0.1 g only tensile forces act upon the leading side of the brake lining and that, upon introduction of a brake force capable to cause a deceleration above 0.1 g, both tensile forces act at the leading side as well as compressive forces act at the trailing side, and wherein the central axis of the bolts (16a, 16b) define a plane (P) which has a smaller radial distance (D) from the disc axis (A) than the center of gravity (F) of the lining layer (36b) of the lining (32b).

2. Disc brake according to claim 1, **characterized in that** the plane (P) which is defined by the central axis of the bolts (16a, 16b, 18a, 18b) has a distance (D) from the disc axis (A) that is at least 5 %, preferably at least 10 % and more preferably at least 15 % smaller than the distance of the center of gravity (R) of the lining layer (36a, 36b) of the lining.

3. Disc brake according to claim 1, **characterized in that** the lining is the outer brake lining (32b).

4. Disc brake according to one of the preceding claims, **characterized in that** the brake linings (32a, 32b) comprise U-shaped recesses (40, 40') in which the bolts (16a, 16b, 18a, 18b) engage.

5. Disc brake according to claim 4, **characterized in that** the brake linings (32a, 32b), in said U-shaped recesses (40, 40') have line contact with the respective bolts (16a, 16b, 18a, 18b).

6. Disc brake according to one of the preceding claims, **characterized in that** the bolts are made of a material different from the material of the brake carrier (10), in particular of corrosion-resistant steel and/or that the bolts comprise a coating of noncorrosive material and/or that the bolts are protected by nitration against corrosion.

7. Disc brake according to one of the preceding claims, **characterized in that** the brake is a floating calliper brake, a floating frame brake, or a fixed caliper brake.

8. Brake lining (32a, 32b) for use with a disc brake which supports the brake lining at two bolts (16a, 16b, 18a, 18b), wherein the brake lining has recesses (40, 40'; 54a, 54b) for such bolts, wherein, upon braking, tensile forces and compressive forces are exerted at the inner surfaces of the recesses, **characterized in that** said recesses are dimensioned such that upon introduction of a brake force which decelerates the vehicle up to a maximum value in the range of 0.1 g only tensile forces act upon the brake lining at the leading side, whereas, upon introduction of a brake force causing a deceleration above 0.1 g, both tensile forces act at the leading side as well as compressive forces act at the trailing side of the brake lining, and wherein the recesses (40, 40') are arranged such that the central axes of the bolts define a plane (P) having a smaller radial distance (D) from the disc axis (A) than the center of gravity (F) of the brake lining layer (36b) of the brake lining (32b).

9. Brake lining according to claim 8, **characterized in that** it comprises U-shaped recesses (40, 40') which are dimensioned and arranged such that they receive guiding bolts (16a, 16b, 18a, 18b) of the brake carrier (10).

10. Brake lining according to claim 9, **characterized in that** the brake linings (32a, 32b), in said U-shaped recesses (40, 40') have line contact with the respective bolts (16a, 16b, 18a, 18b).

## Revendications

1. Frein à disque comprenant un support de frein pouvant être fixé sur un véhicule et présentant des boulons sur le côté entrée et sur le côté sortie du frein, lesquels, lors du freinage, exercent des forces de traction et des forces de pression sur au moins une des garnitures de frein (32 ; 32a, 32b), ladite garniture de frein présentant des logements (40, 40' ; 54a, 54b) pour recevoir les boulons si bien que les forces de traction et les forces de pression sont absorbées aux surfaces intérieures des logements, **caractérisé en ce que** les dimensions et les dispositions relatives des boulons (16a, 16b) et de la garniture du frein sont telles que, lors de l'introduction d'une force de freinage capable de freiner le véhicule jusqu'à une valeur maximale de l'ordre de 0,1 g, seules des forces de traction agissent sur le côté entrée de la garniture de frein, et, lors de l'introduction d'une force de freinage permettant d'introduire un ralentissement au-delà de 0,1 g, et des forces de traction et des forces de pression agissent respectivement sur le côté entrée et sur le côté sortie de la garniture de frein, les axes médians des boulons (16a, 16b) sous-tendant un plan (P) qui est à une plus petite distance radiale (D) de l'axe du disque (A) que le centroïde (F) de la garniture de friction (36b) de la garniture de frein (32b).

2. Frein à disque selon la revendication 1, **caractérisé en ce que** le plan (P), lequel est sous-tendu par les axes médians des boulons (16a, 16b, 18a, 18b), est à une plus petite distance radiale (D) de l'axe du disque (A) que le centroïde (F) de la garniture de friction (36a, 36b) de la garniture de frein, ladite distance étant plus petite d'au moins 5 %, de préférence d'au moins 10 % et encore préférentiellement d'au moins 15 %.

3. Frein à disque selon la revendication 1, **caractérisé en ce que** ladite garniture de frein est la garniture de frein extérieure (32b).

4. Frein à disque selon l'une des revendications précédentes, **caractérisé en ce que** les garnitures de frein (32a, 32b) présentent des réservations (40, 40') en forme du U dans lesquelles les boulons (16a, 16b, 18a, 18b) viennent en prise.

5. Frein à disque selon la revendication 4, **caractérisé en ce que** les garnitures de frein (32a, 32b) ont, dans les réservations (40, 40') en forme du U, un contact linéaire avec le boulon respectivement associé (16a, 16b, 18a, 18b).

6. Frein à disque selon l'une des revendications précédentes, **caractérisé en ce que** les boulons sont constitués d'un matériau autre que celui dont est constitué le support de frein (10), plus particulièrement d'acier peu oxydable et/ou les boulons sont revêtus d'une couche de matériau inoxydable et/ou les boulons sont protégés par nitration contre la corrosion.

7. Frein à disque selon l'une des revendications précédentes, **caractérisé en ce qu'**il s'agit d'un frein à étrier flottant, d'un frein à cadre flottant ou d'un frein à étrier fixe.

8. Garniture de frein (32a, 32b) pour un frein à disque qui maintient la garniture de frein en appui sur deux boulons (16a, 16b, 18a, 18b), la garniture de frein présentant pour ces boulons des logements (40, 40' ; 54a, 54b) sur les surfaces intérieures desquels sont exercées des forces de traction et des forces de pression lors du freinage, **caractérisée en ce que** lesdits logements sont dimensionnés de telle sorte que, lors de l'introduction d'une force de freinage capable de freiner le véhicule jusqu'à une valeur maximale de l'ordre de 0,1 g, seules des forces de traction agissent sur le côté entrée de la garniture de frein, et, lors de l'introduction d'une force de freinage permettant d'introduire un ralentissement au-delà de 0,1 g, et des forces de traction et des forces de pression agissent respectivement sur le côté entrée et sur le côté sortie de la garniture de frein, les logements (40, 40') étant prévus de manière à ce que les axes médians des boulons (16, 16b) sous-tendent un plan (P) qui est à une plus petite distance radiale (D) de l'axe du disque (A) que le centroïde (F) de la garniture de friction (36b) de la garniture de frein (32b).

9. Garniture de frein selon la revendication 8, **caractérisée en ce qu'**elle présente des réservations (40, 40') en forme du U qui sont dimensionnées et disposées de manière à recevoir des boulons de guidage (16a, 16b, 18a, 18b) du support de frein (10).

10. Garniture de frein selon la revendication 9, **caractérisée en ce que** les garnitures de frein (32a, 32b) ont, dans les réservations (40, 40') en forme du U, un contact linéaire avec le boulon respectivement associé (16a, 16b, 18a, 18b).
